# DEMANDE DE BREVET EUROPEEN

(11) **EP 0 963 132 A1**
(43) Date de publication de la demande: **08.12.1999**
(21) Numéro de dépôt: 99401343.1
(22) Date de dépôt: 04.06.1999
(51) Int. Cl.: H04Q 7/38

(54) **Procédé d'administration d'un réseau de stations de base**

(30) Priorité: 04.06.1998 FR 9807009
(71) Demandeur: ALCATEL, 75008 Paris (FR)
(72) Inventeur: Dupuy, Pierre, 75017 Paris (FR)
(74) Mandataire: El Manouni, Josiane

(57) **Abrégé**

Pour résoudre les problèmes d'occupation de bandes de fréquence, dans un réseau de téléphonie avec des mobiles utilisant un protocole de type GSM, on prévoit d'utiliser une fréquence (Fα) de balise unique dans une macro-cellule (17). Dans ces conditions, pour prendre en considération un téléphone mobile (3) qui pénètre (25) dans cette macro-cellule, on repère les voies d'accès physique, géographiques, que doivent emprunter les mobiles pour pénétrer dans cette zone. On attribue alors aux stations de base qui gouvernent ces zones d'accès des fréquences de balise (Fj) spécifiques, différentes de la fréquence de balise unique, de manière à ce que ces stations de base d'accès signalent l'approche du téléphone mobile. Puis un organe central transmet au téléphone mobile une assignation (30) de trafic préférentiel avec cette station de base spécifique d'accès.

## Description

La présente invention a pour objet un procédé d'administration, par un organe central, d'un réseau de stations de base communiquant avec des téléphones mobiles. L'invention est particulièrement utilisable dans le cadre de la téléphonie mobile, de type GSM, avec utilisation de canaux de balises dits BCCH (Broadcast Control CHannel) comme on en rencontre dans les réseaux de type TDMA (Time Division Multiple Access). Par conséquent l'invention ne s'applique pas aux réseaux de type CDMA (Coded Division Multiple Access), qui ne possèdent pas de canal de balise. Le but de l'invention est d'optimiser les ressources disponibles dans les stations de base de ces réseaux, en réduisant l'occupation en fréquence consacrée aux canaux BCCH des différentes cellules du réseau.

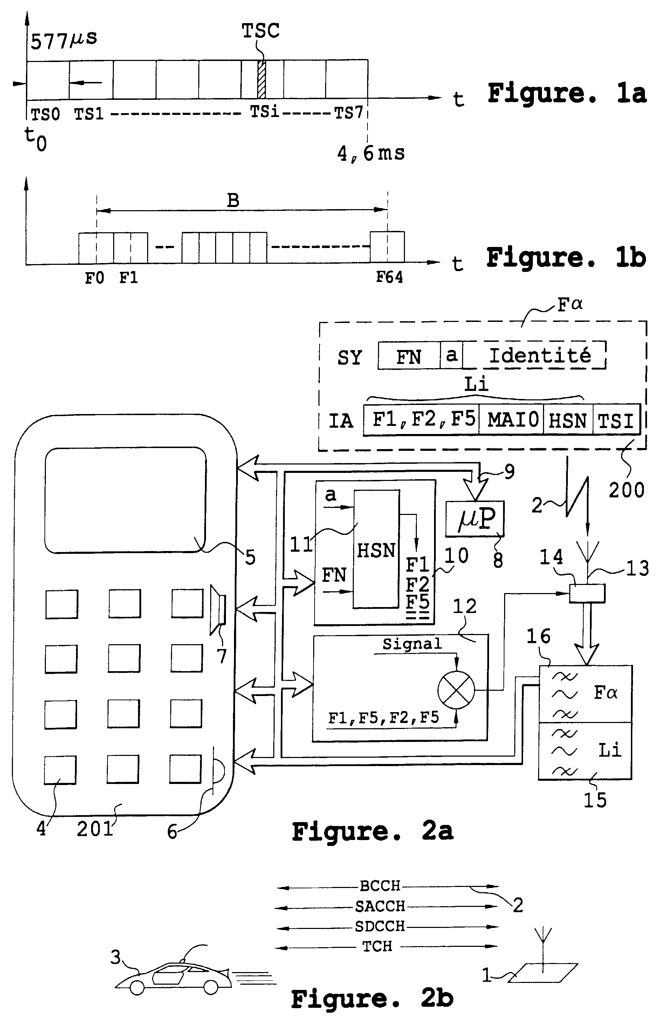

On va montrer à l'examen des figures 1a à 5 suivantes le fonctionnement connu d'un réseau de téléphonie mobile de type GSM. Par la suite on montrera avec ces mêmes figures quelles sont les limites de performance rencontrées par un tel réseau, et quelle est la solution qui leurs est apportée par l'invention.

Les figures 1a et 1b montrent dans le cadre du GSM, respectivement les représentations symboliques d'une trame temporelle GSM et d'une bande de fréquence allouée à un opérateur qui met en oeuvre un tel réseau. En pratique dans un exemple une trame temporelle GSM a une durée d'environ 4,6 millisecondes et est divisée en huit fenêtres temporelles de durée égale à 577 microsecondes. Ces fenêtres temporelles, dites Time Slot (TS0-TS7), sont attribuées à des canaux différents. A chaque canal est associée une fréquence porteuse. La figure 1b montre, pour une bande passante B d'environ 15 MHz attribuée à un opérateur, la possibilité pour ce dernier de répartir plusieurs voies de fréquence. Dans un exemple il y en a 64 qui occupent chacune 200 KHz environ.

En fait, un canal de transmission, s'il est à un instant donné synonyme d'une fenêtre temporelle TSi et d'une fréquence porteuse Fi est cependant associé à une loi de fréquence Li en vertu de laquelle la fréquence pour le canal change d'une trame à la suivante. Ainsi, si plusieurs canaux coexistent, ils peuvent être différenciés par la fenêtre temporelle et/ou la fréquence instantanée de porteuse. Un programme de planification permet d'éviter que deux canaux distincts se développent pour une même trame, dans une même fenêtre temporelle, et avec une même fréquence de porteuse.

Les figures 2a à 4 montrent, en les réduisant aux parties essentielles à l'invention, le principe du saut de fréquence, d'une trame GSM à la suivante. On connaît les raisons de ces sauts en fréquence. Ils ont pour but de répartir des bruits présents préférentiellement sur une bande de fréquence dans plusieurs messages échangés avec le réseau, de manière à ne pas défavoriser complètement un seul message, celui qui emprunterait une bande très bruitée. Cette technique autorise une utilisation sporadique d'une même fréquence Fi dans des cellules voisines. Elle apporte ainsi un gain statistique significatif selon le principe dit de diversité de fréquence comme cela est expliqué dans : "The GSM - Global System for Mobile Communications" produit et publié par M. MOULY et M. B. PAUTET, Editions 1992, pages 218 - 233.

Les figures 2a et 2b montrent le principe du saut en fréquence (hopping) lors de chaque trame. Sur la figure 2b, une station de base 1 émet, sur un canal 2 de balise dit BCCH, en direction d'un mobile 3, un message de synchronisation et d'assignation. La figure 2a montre que le mobile 3 porte un téléphone mobile 201. Le message de synchronisation et d'assignation est montré symboliquement dans un cadre en tirets 200 sur la figure 2a. Ce message 200 a été émis par exemple à une fréquence Fa caractéristique du canal de balise BCCH.

Une partie, SY, du message 200 émis par la station de base 1 concerne la synchronisation. La partie SY comporte elle-même deux parties principales. Une première partie (codée sur 22 bits dans le cadre du GSM) dénommée FN représente un numéro de trame (Frame Number). En pratique ce numéro de trame représente l'heure puisque le numéro des trames évolue avec le temps. C'est donc un signal continûment variable au moins en cours d'une journée ou d'une période assez longue.

Une deuxième partie du signal SY permet à la station de base de s'identifier. La station de base donne ainsi d'une part son identité, codée sur une vingtaine de bits, et d'autre part, elle donne sa couleur. La couleur, ici représenté par le symbole a, comporte sur trois bits une première information dite PLMN (Public Land Mobile Net) représentative, sous une forme réduite, du code de l'opérateur. Ceci permet à un téléphone mobile de savoir, compte tenu d'un abonnement souscrit auprès d'un opérateur par son utilisateur, s'il a à converser et à tenir compte des informations délivrées par la station de base 1. Sur trois autres bits (ce qui offre une possibilité de différenciation modulo 8), la station de base 1 s'identifie en raccourci : elle indique sa couleur a. L'expérience a montré qu'il suffisait, compte tenu des signaux à fréquence Fa reçus, éventuellement de multiples origines, de se satisfaire de ces trois bits pour identifier rapidement la station de base qui émet sur la fréquence balise.

Le fait d'utiliser une couleur permet à deux stations de base, assez éloignées l'une de l'autre, d'utiliser une même fréquence Fα de balise, sans que des téléphones mobiles qui captent ces signaux de balise relèvent une ambiguïté sur la station de base dont ils sont proches. Après transmission à un organe central de la fréquence de balise Fα détectée, et de la couleur a interprétée, l'organe central sait quelle est la station de base captée par le téléphone mobile.

Un canal CCCH (Common Control CHannel) associé au canal BCCH sert à transmettre un signal d'assignation. On appelle ce signal d'assignation IA, comme "lmmediate Assignment". Le signal IA est aussi représenté dans le cadre 200 en tirets. Le signal IA est représentatif d'une assignation d'un canal de communication qui a été attribué au téléphone mobile 201 du mobile 3 pour son trafic avec la station de base 1. Ce message d'assignation IA comporte une indication TSi permettant de déterminer une allocation dans la trame temporelle. Il comporte par ailleurs une indication Li d'une loi de fréquence qui comporte trois arguments principaux. Un premier argument de Li concerne une désignation de porteuses de la bande B. Par exemple on a montré ici qu'il s'agit des porteuses F1, F2 et F5. Le nombre des porteuses peut être un nombre quelconque différent de trois. Les porteuses choisies sont situées parmi les soixante-quatre (ou autres) fréquences de la bande B.

Comme deuxième argument de la loi Li, le message IA comporte une indication MAIO (Mobile Allocation ldentity Offset). Le message MAIO est en fait une valeur comprise entre un et n, n étant le nombre de porteuses du premier argument.

Comme troisième argument de la loi Li, le message IA comporte une désignation d'un algorithme HSN (Hopping Sequence Number) d'élaboration de nombres pseudo-aléatoires. Les nombres pseudo-aléatoires produits par l'algorithme HSN sont compris, eux aussi entre 1 et n (ou 0 et n-1), où n est le nombre de porteuses du premier argument.

Le téléphone mobile 201 comporte, en plus de boutons de commande 4, d'un écran 5, d'un microphone 6 et d'un haut-parleur 7, un circuit de commande interne. Ce circuit de commande interne comporte essentiellement un microprocesseur 8, et un bus de communication 9 entre ces divers organes. Le bus 9 permet notamment la communication avec un circuit 10 mettant en oeuvre un algorithme HSN 11 d'élaboration des nombres aléatoires. L'algorithme 11 est paramétré par le signal a, représentatif de la couleur de la station de base qui va gérer le mobile, et par le signal FN représentatif de l'heure et continûment variable.

Dans l'exemple simple représenté dans lequel il y a trois fréquences F1, F2, F5, le résultat disponible à la sortie de l'algorithme 11 est une suite aléatoire de trois symboles par exemple 0, 1 ou 2, désignant des fréquences de porteuses F1, F2, F5. Autrement dit, une fois que le téléphone mobile a reçu le signal IA, son circuit 10 délivre pour chaque trame, aléatoirement, la fréquence Fn qui doit être utilisée comme porteuse pour différencier son canal. Cette fréquence évolue à chaque trame puisque à chaque trame le circuit 11 reçoit par l'intermédiaire du signal SY un nouveau signal FN.

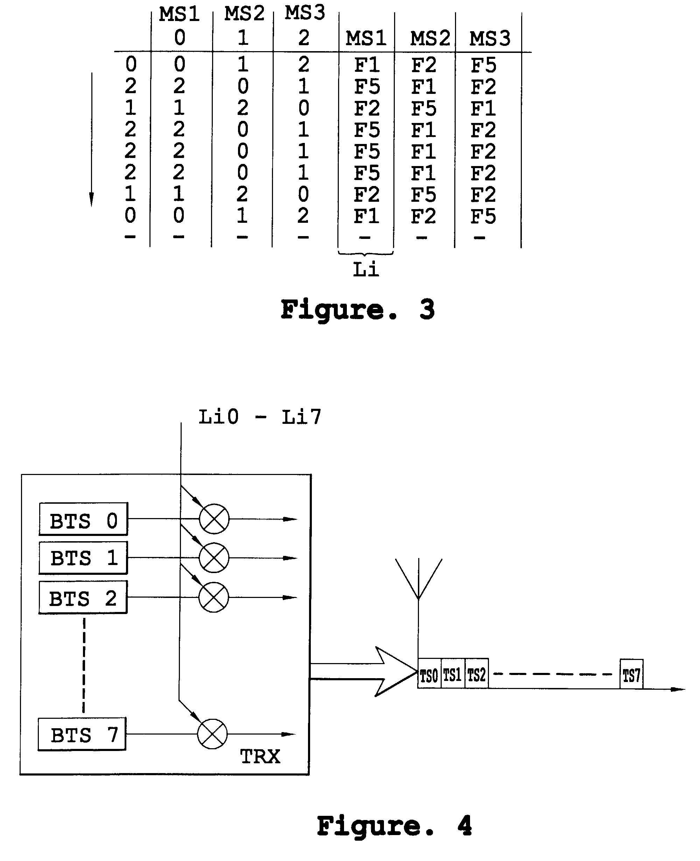

La figure 3 montre l'élaboration, selon une loi de fréquence Li, des désignations aléatoires des porteuses. Dans une première colonne on a montré une suite temporelle de nombres 0, 1 ou 2 produits par l'algorithme 11. On ajoute ensuite la valeur de l'argument MAIO affecté aux mobiles, valeur 0, 1 ou 2, au nombre aléatoire produit par l'algorithme 11. Cette addition est effectuée modulo n (ici donc modulo 3). Par exemple pour un téléphone mobile MS1 pour lequel le nombre MAIO affecté est 0, le numéro de la fréquence relative à l'addition est exactement la même que celui délivré par l'algorithme 11. Pour un deuxième téléphone mobile MS2, affecté d'un rang MAIO de valeur 1, on ajoute 1, modulo 3, à la valeur du nombre aléatoire. De même pour un troisième téléphone mobile MS3 affecté d'un rang MAIO de valeur 2.

Compte tenu de la suite aléatoire représentée, après addition, le résultat attribué au mobile MS1 est 0, 2, 1, 2, 2. Les fréquences attribuées correspondantes sont alors F1, F5, F2, F5, F5, ... . Et ainsi de suite pour MS2 et MS3. Cette succession de fréquences porteuses est constitutive de la loi Fi avec laquelle le téléphone mobile 201 va trafiquer avec la station de base 1. Dans un modulateur 12, le signal de parole est alors modulé successivement en fonction des numéros des trames GSM par un signal à une fréquence de modulation F1, F5, F2, F5, F5, ... .

Le signal modulé est émis sur l'aérien 13 du téléphone mobile 201. Un duplexeur 14 permet à l'aérien 3 de servir à la fois pour l'émission et la réception. En réception un récepteur 15 applique la même loi de fréquence Li et après traitement permet l'écoute des messages sur le haut-parleur 7. Un récepteur additionnel 16, centré sur la fréquence Fα de balise lui permet de recevoir les signaux émis sur le canal BCCH 2.

En pratique alors que le trafic normal entre la station de base 1 et le mobile 3 s'effectue sur un canal de trafic TCH (Trafic CHannel), les signaux de Immediate Assignment peuvent lui être transmis par ce canal TCH au lieu d'être transmis sur le canal CCCH associé au canal BCCH. Si le mobile n'est pas en trafic son canal d'échange avec la station de base sera, au moment des changements de zones de localisation, un canal dit SDCCH (Stand-alone Dedicated Control CHannel) qui permet de suivre le parcours emprunté par le mobile au cours de son déplacement.

La figure 4 montre la structure interne d'une station de base 1 comprenant huit circuits élémentaires dits BTS0 à BTS7 affectés chacun à une fenêtre temporelle TS0 à TS7. Chacun de ces circuits BTS comporte un modulateur associé dans lequel des signaux de parole sont modulés par une fréquence Fi0 à Fi7 qui elles-mêmes dépendent de lois de fréquence Li0 à Li7 affectées à chacune de ces fenêtres. En effet, une loi Li doit s'appliquer au téléphone mobile 201, à la station de base 1, et pour une fenêtre temporelle i donnée. Pour chaque fenêtre temporelle, il peut y avoir une loi de fréquence différente. Les lois de fréquence Li0 à Li7 peuvent être identiques puisqu'elles correspondent à des fenêtres temporelles séparées.

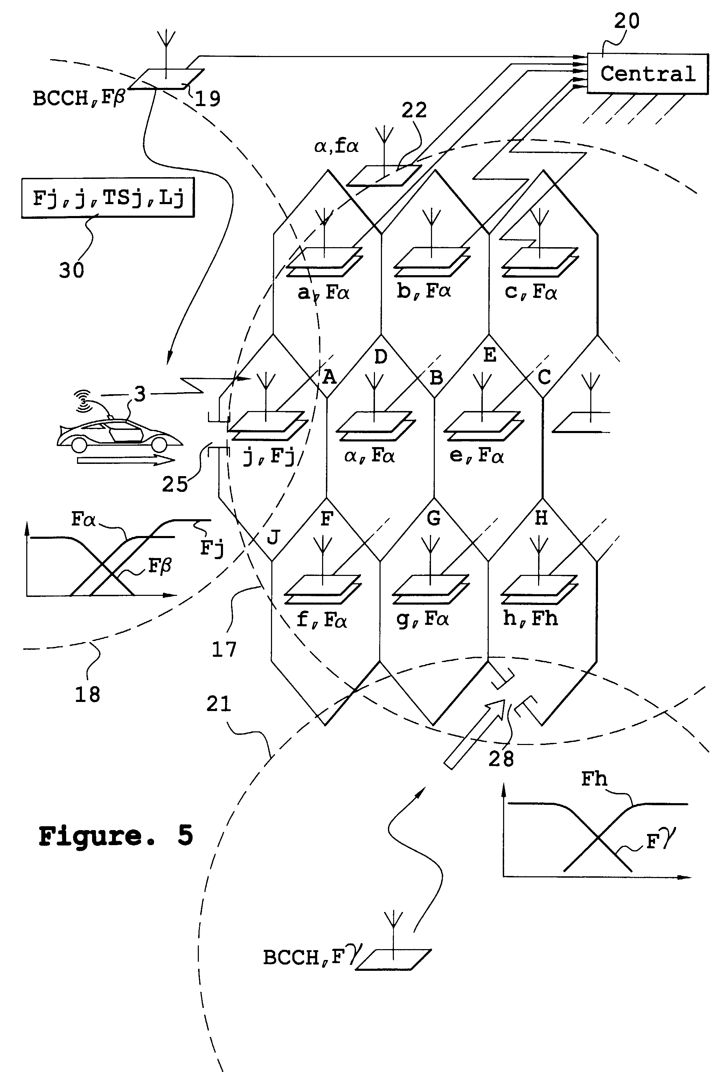

La figure 5 montre un réseau de stations de base dans lequel le problème résolu par l'inventeur va être expliqué. Les stations de base représentées sont contiguës, possèdent des couleurs respectivement a à j et ont chacune un domaine cellulaire de couverture radioélectrique A à J. Les domaines cellulaires A à J peuvent en même temps être couverts, dans un exemple, ensemble par une macro-cellule parapluie 17 dont le rayonnement radioélectrique est plus grand. Le contour 17 de ce rayonnement est montré en tirets. Une station de base 22 gouverne le domaine 17. Toutes ces stations de base sont reliées à un organe central 20 de planification et de commutation.

Dans l'état de la technique, et dans l'utilisation réelle, les fréquences de balise des canaux BCCH de chacune des cellules A à J sont différentes. En conséquence, un mobile 3 qui approche d'une de ces cellules en provenance d'une autre macro-cellule 18, ou d'une autre cellule tout simplement, peut signaler à sa station de base 19 avec laquelle il trafique les désignations et les amplitudes de fréquences de balise des cellules dont il se rapproche. En effet, il capte ces signaux par son récepteur additionnel 16 qui scrute toutes les fréquences de balise possible.

Au moment où un transfert de communication s'avère nécessaire, l'organe central 20 peut alors imposer le transfert de la communication établie entre le mobile 3 et la station de base 19 à une communication à établir entre le mobile 3 et celle des cellules A à J, ou même de la macro-cellule 17, dont le mobile 3 perçoit le mieux les émissions de fréquence de balise. La reconnaissance de cette cellule la plus qualifiée pour l'accueillir est évidente si chaque cellule accueillante utilise une fréquence de balise différente. Un tel mécanisme est par exemple présenté dans le brevet français FR-B-2 724 523.

Cependant, l'utilisation de fréquences de balise individualisées pour chaque cellule heurte la technique de saut de fréquence envisagée précédemment. En effet cette technique de saut de fréquence nécessite de disposer, dans chaque fenêtre temporelle, pour chaque cellule, d'un certain nombre de fréquences libres. Par exemple il fallait trois fréquences, les fréquences F1, F2, F5, pour constituer la loi Li. Compte tenu du nombre de cellules voisines (A à H, soit 10 à 15 cellules pour la macro-cellule 17, et autant pour la macro-cellule 18, et autant encore pour une autre macro-cellule 21 voisine de la macro-cellule 17 et de macro-cellule 18, et ainsi de suite) on peut montrer que l'encombrement en fréquence devient rapidement un problème.

En effet les signaux émis de manière continue aux fréquences de balise Fα sont des brouilleurs pour les canaux de communication TCH utiles des cellules.

L'élaboration d'un tel réseau, avec des fréquences de balise individualisées pour chaque cellule, nécessite donc une planification relativement inextricable et qui le devient de plus en plus au fur et à mesure que la densité des cellules augmente dans un domaine. Elle nécessite par ailleurs de se rendre sur place physiquement, dans les domaines A à J, pour mesurer effectivement les conditions de propagation des voies fréquentielles. Toute cette complexité est due à l'occupation en fréquence des différentes fréquences de balise dans les macro-cellules 17, 18 et 21 et autres. Dans l'utilisation réelle c'est néanmoins cette technique qui prévaut.

Il a été imaginé et testé, notamment dans le cadre du brevet français cité ci-dessus ainsi que dans celui de la demande de brevet européen EP-A-0 504 122, un procédé dans laquelle dans une macro-cellule 17 il n'y a plus qu'une seule fréquence de balise Fα. C'est cette représentation qui est montrée sur la figure 5 où la station de base parapluie 22 émet un message de supervision sur un canal BCCH à la fréquence de balise Fα. Chacune des stations de base de domaine A à J du domaine 17 peut émettre, ou non (et dans ce cas elles ne font qu'écouter), un message de supervision à la fréquence unique commune Fα. Ou bien même, la station de base 22 n'émet pas, mais toutes les stations de base des domaines A à J émettent un même message de supervision à cette fréquence commune Fα. Les synchronisations en émission ou en répétition des messages de supervision sont assurées par l'organe central 20. L'avantage immédiat de ce procédé est de laisser disponible des fréquences de balise inemployées. Les fréquences disponibles peuvent servir de canaux de type TCH pour des échanges entre les stations de base et les différents mobiles.

Dans les documents cités ci-dessus il a été imaginé des systèmes par lesquels les différentes cellules A à J se transmettaient les communications des mobiles qui circulent d'une cellule à l'autre. Pour simplifier, un message HO d'assignation pour "Hand Over", du type du message IA, est utilisé pour assigner de nouvelles lois de fréquence. Ce message HO est relatif à un transfert de communication. Il est transmis au mobile 3 par la station de base avec lequel le mobile était précédemment en relation, avant qu'il ne la quitte, et sur instruction de l'organe central 20. Le message HO est transmis via le canal TCH de communication de ce mobile 3 avec cette station de base quittée. Il n'y a donc pas utilisation du canal de balise BCCH à Fα pour ces transferts. Comme le message HO est transmis sur le canal TCH (en employant à cet effet, une fois, une fenêtre temporelle), il n'y a pas besoin non plus de canal BCCH pour la cellule elle-même.

De même, ces documents règlent la question des mobiles qui étaient en sommeil et qui sont soit sollicités par un appel entrant ou qui eux-mêmes sollicitent une station de base dans le cadre d'un appel sortant (au moment où l'utilisateur du téléphone mobile veut lui-même appeler un autre utilisateur). Dans ce cas les transactions utilisent d'une manière connue les canaux dits CCCH ou PCH (Paging CHannel) internes à la cellule où ils se trouvent.

Par contre, aucun de ces documents n'a prévu le cas des mobiles 3 qui proviennent d'une autre macro-cellule 18 dans laquelle la fréquence balise Fβ est justement différente de la fréquence balise Fα de la macro-cellule 17 dans laquelle le mobile 3 pénètre.

Le mobile 3 qui s'éloigne d'une macro-cellule 18 (ou d'une cellule tout simplement) voit décroître en qualité le message de balise Fβ de la cellule qu'il quitte. Par contre, il voit croître en qualité le message de balise Fα de la macro-cellule 17 dont il se rapproche. Le mobile 3 transmet des informations correspondantes à une station de base 19. En conséquence la station de base 19 va prévenir l'organe central 20 de ce qu'une des cellules d'une autre macro-cellule (à priori on ne sait pas encore qu'il s'agit de la macro-cellule 17) devra gérer la communication avec le mobile. Là se pose un problème qui n'est pas résolu dans l'état de la technique.

En effet alors que le dessin de la figure 5 montre que le mobile va pénétrer par l'intermédiaire de la cellule J dans le domaine 17, dans la pratique on ne sait pas du tout ni quel est le domaine d'accueil, ni quelle est parmi les cellules A à J de ce domaine d'accueil, la cellule J que le mobile va détecter puisque toutes les cellules A à J émettent un même signal de supervision à la fréquence de balise Fα (quand elles en émettent un). Notamment, la représentation connexe des cellules de la figure 5 n'est pas représentative de la réalité. Par exemple une cellule A, D ou F correspondra à une rue, alors qu'une cellule quittée de la macro-cellule 18 correspondra à un couloir du métropolitain. Ce couloir débouche à l'air libre dans le domaine de la cellule J. La cellule J a dans ce cas une grande imbrication dans les cellules connexes A, D, F d'accueil. De ce fait, les domaines de couverture radioélectrique ne sont pas aussi simplement identifiés que ce qui est montré. Ainsi, la cellule J peut tout aussi bien se trouver au milieu du maillage A à H. On utilisera néanmoins le terme de périphérie pour désigner une telle cellule J dans le sens où cette cellule est une cellule par laquelle transitent physiquement et obligatoirement les mobiles qui quittent une macro-cellule 18 dont la fréquence balise Fβ est différente de la fréquence de balise Fa dans la macro-cellule 17.

Le message HO transmis par la station de base 19 au mobile 3, avant de l'abandonner à son sort, pour ses communications avec une des cellules de la macro-cellule 17, doit comporter la désignation d'une loi de fréquence Li et d'une fenêtre TSi. Ce message HO est transmis au mobile 3 simultanément avec l'instruction donnée à toutes les stations de base de la macro-cellule 17 de se préparer à accueillir le mobile 3 qui entre sous leur couverture. Autrement dit, pour un seul mobile entrant, on est obligé de neutraliser un canal TCH dans chacune des cellules de la macro-cellule 17. Autrement dit, le coût d'un mobile entrant en terme de réservation de ressource est excessivement onéreux. En effet, avec des équipements TRX comme ceux montrés sur la figure 4, on doit réserver un circuit BTS dans chaque station de base pour recevoir le transfert. S'il y a 15 cellules, on va neutraliser 15 circuits BTS alors qu'un seul va être utile. En outre, on comprend facilement que si on veut autoriser en permanence l'entrée simultanée de huit téléphones mobiles, le transmetteur TRX avec huit voies devient totalement indisponible pour assurer les communications des mobiles qui trafiquent déjà. Dans ce cas l'équipement de la figure 4 doit être augmenté, par exemple doublé, pour assurer huit communications. Dans l'utilisation normale, une station de base ne comporte qu'un transmetteur TRX, quelques fois elle en comporte deux. On mesure ainsi les conséquences en termes de coût de la gestion du transfert des communications des mobiles entrant dans la macro-cellule 17.

Autrement dit le problème à résoudre par l'invention est celui de l'augmentation du taux d'acceptation des mobiles entrant dans la macro-cellule 17 dans laquelle on a choisi un canal BCCH unique (émettant sur une fréquence balise Fα unique) pour, par ailleurs, rendre plus facile la planification des sauts en fréquence (dont l'avantage technologique est par ailleurs indéniable).

La diffusion d'un message sur une fréquence de balise est en effet pénalisante parce que, pour des cellules voisines de l'émetteur de balise, qui capteraient ce message de balise, ce message de balise est équivalent à un brouilleur parfait, impossible à évacuer dans la bande de fréquence de cette fréquence balise. En conséquence la gamme de fréquence de balise doit être neutralisée pour les fréquences disponibles par saut de fréquence.

Dans l'invention on se situe donc dans le cadre d'une macro-cellule avec une fréquence de balise commune pour un canal BCCH.

Dans l'invention pour résoudre ce problème de neutralisation inutile de circuits BTS dans toutes les cellules A à J, on exploite la topographie des lieux par où sont susceptibles d'entrer beaucoup de mobiles. Dans l'invention, une station de base qui couvre un lieu par lequel un mobile entre dans le domaine couvert par la macro-cellule 17 est alors dotée d'une fréquence de balise supplémentaire. Seule cette station de base d'accès préférentiel est ainsi équipée. Dans un immeuble de bureaux, la station de base d'accueil peut ainsi être placée dans un sas d'entrée de l'immeuble par lequel sont obligés d'entrer tous les porteurs de téléphones mobiles.

La solution de l'invention est donc une solution hybride entre une solution où toutes les stations de base d'une macro-cellule ont une fréquence de balise individualisée et une solution dans laquelle elles ont toutes une fréquence de balise commune et unique.

Selon l'invention, un mobile qui pénètre dans le domaine 17 par une cellule J, qui est physiquement placé sur un trajet d'accès obligatoire au domaine 17, détectera des signaux de balise à la fréquence Fβ, la fréquence de balise de la macro-cellule 18 qu'il quitte, à la fréquence Fα, la fréquence de balise de la macro-cellule 17 dans laquelle il pénètre, et à une fréquence Fj, la fréquence de balise spécifique de la cellule J appartenant à la macro-cellule 17 par laquelle justement il pénètre dans cette macro-cellule 17. Dans ces conditions, il est facile pour l'organe central 20 de transférer la communication entre le mobile 3 et la station de base 19 en une communication entre ce mobile 3 et une station de base 23 de la cellule J.

L'invention a donc pour objet un procédé d'administration par un organe central d'un réseau de stations de base communiquant avec des téléphones mobiles dans lequel
- des domaines cellulaires, à l'intérieur d'un domaine d'une première macro-cellule, sont gouvernés chacun par une station de base et possèdent en commun un canal BCCH de synchronisation,
- sur le canal BBCH est émis continûment, à une fréquence de balise commune, un signal de synchronisation de toutes les stations de base des cellules de cette première macro-cellule,
- les stations de base de cette première macro-cellule trafiquent avec des téléphones mobiles dans des canaux de trafic aménagés avec des lois de fréquence calées sur ce signal de synchronisation délivré par ce canal BCCH,
- une communication d'un téléphone mobile en trafic avec une station de base d'une deuxième macro-cellule, et pénétrant dans le domaine de la première macro-cellule, est transférée à une station de base de cette première macro-cellule par un ordre comportant une assignation d'un protocole de communication avec une station de base de la première macro-cellule,
caractérisé en ce que
- l'organe central dédie, à priori, une station de base spécifique de cette première macro-cellule à cette communication pénétrante,
- cette station de base spécifique émet un message à une fréquence spécifique de balise différente de la fréquence de balise commune.

L'invention sera mieux comprise à la lecture de la description qui suit et à l'examen des figures qui l'accompagnent. Celles-ci ne sont données qu'à titre indicatif et nullement limitatif de l'invention. Les figures montrent :
- Figure la à figure 5 : les diagrammes déjà commentés permettant de situer à la fois l'état de la technique, le problème présenté, et la solution de l'invention ;

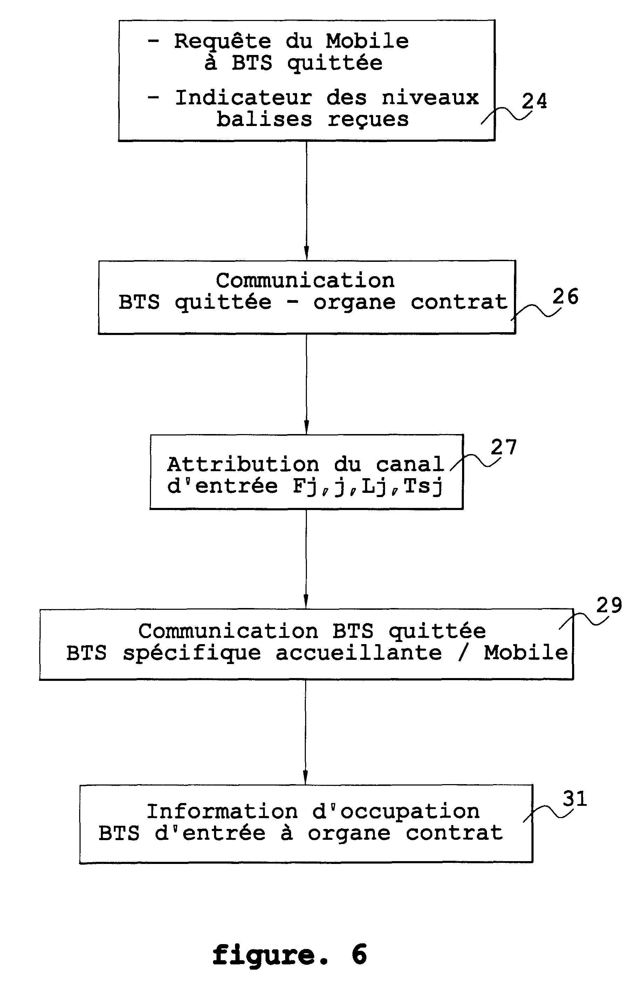

- Figure 6 : l'organigramme des opérations mises en oeuvre dans le procédé de l'invention pour conduire au transfert de la communication d'une macro-cellule à une autre.

Selon ce qui a été indiqué précédemment, en référence à la figure 5, le mobile 3 reçoit de la station de base 19 qu'il va quitter un message HO de Hand Over. Ce message HO d'assignation, comporte les indications suivantes : Fj, j, TSj, et Lj. De l'information Fj le mobile 3 sait qu'il doit écouter la fréquence de balise Fj pour se synchroniser. En écoutant le signal à la fréquence Fj qui comportera notamment l'information FNj (relative à l'heure), il recevra également l'information j relative à la couleur de la station de base de la cellule 23. Le signal FNj est relatif au décalage d'heure de la cellule spécifique J qui l'accueille, de façon à ce que le mobile puisse se synchroniser temporellement très exactement sur un instant t0 (figure la) de début de trame temporelle dans la cellule accueillante et dans les autres cellules de la macro-cellule 17. Les indications Fj et j sont essentielles pour déterminer, selon l'invention, quelle station de base est, à priori dédiée par l'organe central 20 à la communication pénétrante. On notera que la cellule d'accès peut être la cellule J. Elle pourrait aussi être la macro-cellule parapluie 17 elle-même. Dans ce dernier cas, toutes les cellules A à J auraient un canal BCCH à la fréquence Fα.

Le mobile 3 reçoit également dans l'ordre HO, une assignation TSj (j compris de 0 à 7) pour savoir quelle est la fenêtre temporelle, par rapport à l'instant t0, dans laquelle il va devoir trafiquer. Il reçoit enfin des informations relatives à la loi Lj d'accueil. Comme représentée sur la figure 2a, dans le message 200 cette loi Lj comportera les désignations des fréquences avec lesquelles il devra communiquer lorsqu'il sera en trafic dans la cellule J (les fréquences F1, F2, F5 comme indiqué précédemment), compte tenu de son rang MAIO attribué et de l'algorithme 11 HSN constitutif de la loi Lj.

Au premier chef, les indications TSj et Lj ne sont pas indispensables au moment du transfert de communication. On pourrait en effet laisser la communication s'établir dans le canal BCCHj, de la cellule J puis transmettre, sur ce canal BCCHj un autre ordre IA pour faire migrer la communication sur un autre canal. Cependant, disposant dès le départ, des informations nécessaires, il est préférable de désigner avec le premier ordre HO, directement, le canal TCH (TSj, Lj) à utiliser.

Un réseau est dit synchronisé lorsque toutes les cellules possèdent une référence temporelle commune. Un réseau avec canal BCCH commun est obligatoirement un réseau synchronisé. Un réseau asynchrone, ou non synchronisé, est un réseau dans lequel le signal de numéro de trame FN est dépendant de chaque cellule. Un réseau peut par ailleurs être synchronisé même si chaque cellule possède son propre canal BCCH avec sa propre fréquence de balise. Il suffit que les signaux FN de trame soient les mêmes, et délivrés au même moment. L'invention concerne donc les réseaux synchronisés encore que la cellule Fj, elle, puisse ne pas être synchronisée, si on prend soin par ailleurs de l'écart qui en résulte.

Quand il y a un arrangement de micro-cellules dans une macro-cellule, en général la macro-cellule est une macro-cellule parapluie rayonnant globalement dans l'espace de toutes les micro-cellules et éventuellement dans des espaces entre micro-cellules non couverts par ces micro-cellules. Typiquement l'aérien de rayonnement d'une macro-cellule est située au-dessus des toits des maisons d'une agglomération, alors que l'aérien des micro-cellules est situé en dessous de la hauteur des toits, par exemple en façade de maison pour constituer une cellule par propagation des émissions le long d'une rue, avec réflexion le long de ces façades. Des micro-cellules sont ainsi par ailleurs destinées à assurer les communications à des carrefours. Dans ce cas leurs ondes se propagent dans toutes les voies de circulation aboutissant aux carrefours.

Dans les systèmes avec balise individualisée par cellule, le téléphone mobile écoute les différents signaux émis aux différentes fréquences de balise et transmet à la station de base avec laquelle il est en relation les différents niveaux et qualités des messages aux fréquences balises reçues. Les stations de base transmettent les informations correspondantes à l'organe central 20 qui organise, en cas de besoin, les transferts.

Dans le cas où il y a un canal BCCH unique, avec une fréquence de balise unique, un téléphone mobile ne peut distinguer dans les signaux reçus sur le canal de balise leur provenance. Dans ce cas, la charge de l'écoute est transposée sur les stations de base. Ces stations de base sont alors chargées d'écouter tous les mobiles situés dans leur environnement et qu'elles reçoivent. Dans ce but, la partie centrale d'un message de parole échangé entre un téléphone mobile quelconque et sa station de base sur un canal TCH, comporte une information TSC (figure la) sur l'identité du téléphone mobile (ou de la communication en cours). Ces informations d'identités sont transmises à l'organe central 20 qui, là encore, attribue les communications aux différentes stations de base en fonction du besoin et organise la gestion générale des communications dans la macro-cellule. Ce type de fonctionnement est identique dans l'invention de ce qu'il est dans l'état de la technique. Notamment, les stations de base reçoivent de l'organe central 20 un ordre d'écouter le trafic des téléphones mobiles en communication avec des stations de bases voisines. Cet ordre comporte pour chaque téléphone mobile à écouter la désignation de sa fenêtre temporelle (TSi), de sa loi de fréquence (Fi), et de son identité (TSC). Les stations de base écoutent les communications établies par leurs voisines. Elles mesurent la qualité des signaux reçus et attribuent ces résultats aux téléphones mobiles respectifs. Puis, elles transmettent les résultats qualitatifs de ces écoutes à l'organe central pour que celui-ci administre le réseau en conséquence.

La figure 6 montre le mode de transfert de communication résultant de l'organisation de la macro-cellule 17 de l'invention. Au cours d'une étape 24 le mobile 3 (figure 5) signale à la station de base 19 avec laquelle il est en relation qu'il reçoit de moins en moins le message de balise à la fréquence Fβ, mais qu'il reçoit de mieux en mieux le message de balise de la macro-cellule 17 à la fréquence Fα, ainsi que le message de balise de la station de base spécifique 23 à la fréquence Fj. Le mobile 3 va naturellement accéder par une voie 25 d'accès privilégié dans le domaine 17. En fonction des différents niveaux et qualités des messages de balise, quand ils passent un certain seuil, le mobile 3 et ou la station de base 19 vont émettre une requête en transfert. Au cours d'une étape 26, la station de base 19 qui est la station de base qui doit être quittée, puisque ses conditions de communication deviennent mauvaises, transmet à l'organe central 20 ces informations de niveau ainsi qu'une requête en désignation d'une station de base à qui le mobile 3 doit être confié.

Au cours d'une étape 27, l'organe central 20 élabore une attribution de canal. Dans l'état de la technique, cette élaboration de canal aurait imposé soit l'attribution d'un canal temporaire de la station de base parapluie 22 soit la mise en attente systématique de toutes les cellules A à J sur un canal d'accès. A l'opposé dans l'invention, compte tenu d'une part de la présence de l'accès privilégié 25, situé dans le domaine de rayonnement de la station de base 23, et par ailleurs de la connexité des domaines 18 et 17, l'organe central 20 attribue un canal d'entrée avec une loi de fréquence Lj pour la cellule de couleur j puisque le mobile 3 a signalé qu'il recevait des émissions de balises à la fréquence Fj (donc provenant de la station de base 23).

Si l'organe central 20 ne connaît ni la topographie des lieux, ni le contour de la zone 17, il est possible que les informations qui lui soient données ne soient pas suffisantes pour savoir si le mobile 3 entre par un accès 25 de la cellule J ou par un accès 28 d'une autre cellule périphérique H.

Dans ce cas, selon l'invention, soit la cellule H (qui est aussi une cellule spécifique de périphérie) possède comme fréquence de balise la même fréquence que la cellule J, et alors la cellule J et la cellule H doivent réserver toutes deux un canal pour le mobile entrant. Cette solution est moins polluante en terme d'occupation de bande de fréquence, puisque le nombre des fréquences balise est réduit. Mais elle est plus coûteuse en équipement (mais seulement pour les stations de base spécifiques). Soit les fréquences de balise Fj et Fh sont différentes, et dans ce cas l'assignation de canal et de cellule est immédiate puisque le mobile a signalé qu'il recevait Fj et qu'il n'a pas signalé qu'il recevait Fh.

L'assignation de canal est même directe en ce sens que de préférence l'organe central transmet en même temps dans l'étape 27 au mobile 3 une assignation de loi des fréquence Lj (ou Lh) et de fenêtre temporelle TSj (ou TSh). On aurait pu, selon l'invention laisser le mobile trafiquer provisoirement sur une voie de BCCH de la station de base 23. Il est préférable bien entendu d'assigner directement la loi de fréquence Lj et la fenêtre temporelle TSj.

La station de base 19 envoie ensuite au cours d'une étape 29 un message 30 au mobile 3 correspondant à l'attribution 27. Dès qu'il reçoit le message 30 le mobile 3 commute au cours de l'étape 29.

En ce qui concerne le mobile 3, la seule commutation qu'il doit effectuer consiste à modifier d'une part sa loi de fréquence, et d'autre part sa fenêtre temporelle. La station de base 19 quittée, quant à elle, cesse d'assurer la liaison avec le mobile 3. Par contre la station de base 23 a été prévenue au cours de la même étape 29 par l'organe central 20 qu'elle avait à assurer la liaison avec le mobile 3.

D'une manière préférée dans l'invention, compte tenu que la station de base 23 joue, par ailleurs, un rôle normal d'acheminement des communications des mobiles qui circulent à l'intérieur de son domaine cellulaire ou à l'intérieur du domaine de la macro-cellule 17, il est possible que des ressources de cette station de base 23 spécifique d'entrée soit progressivement employées, alors que d'autres sont progressivement libérées (parce que des communications cessent, ou parce que des mobiles quittent l'espace de la station de base 23). Dans ces conditions au cours d'une étape 31 répétée en permanence, l'organe central 20 tient à jour la liste des ressources de la station de base 23 qui sont employées et de celles qui sont disponibles. En conséquence l'attribution 27 d'un canal d'entrée à un mobile 3 qui pénètre dans la région 17 ne sera pas toujours fixée à la même valeur de loi de fréquence Lj et de fenêtre temporelle TSj. Ces valeurs évoluent en fonction de la disponibilité de la station de base 23.

## Revendications

1. Procédé d'administration par un organe central (20) d'un réseau de stations de base (a à j) communiquant avec des téléphones mobiles (3, 201) dans lequel
- des domaines cellulaires (A à J), à l'intérieur d'un domaine (17) d'une première macro-cellule, sont gouvernés chacun par une station de base et possèdent en commun un canal BCCH de synchronisation,
- sur le canal BBCH est émis continûment, à une fréquence (Fα) de balise commune, un signal de synchronisation (FN) de toutes les stations de base des cellules de cette première macro-cellule,
- les stations de base de cette première macro-cellule trafiquent (TCH) avec des téléphones mobiles dans des canaux de trafic (TSi, Li) aménagés avec des lois de fréquence calées sur ce signal de synchronisation délivré par ce canal BCCH,
- une communication d'un téléphone mobile en trafic avec une station de base d'une deuxième macro-cellule (18), et pénétrant (25) dans le domaine de la première macro-cellule, est transférée à une station de base de cette première macro-cellule par un ordre (HO) comportant une assignation d'un protocole de communication (TSj, Lj) avec une station de base de la première macro-cellule, caractérisé en ce que
- l'organe central dédie, à priori, une station de base spécifique (23) de cette première macro-cellule à cette communication pénétrante,
- cette station de base spécifique émet un message à une fréquence spécifique (Fj) de balise différente de la fréquence de balise commune.

2. Procédé selon la revendication 1, caractérisé en ce que
- les stations de base reçoivent de l'organe central un ordre d'écouter le trafic des téléphones mobiles en communication avec des stations de bases voisines,
- cet ordre comporte pour chaque téléphone mobile à écouter la désignation de sa fenêtre temporelle (TSi), de sa loi de fréquence (Fi), et de son identité (TSC),
- les stations de base écoutent les communications établies par leurs voisines,
- elles mesurent la qualité des signaux reçus et attribuent ces résultats aux téléphones mobiles respectifs, et
- elles transmettent les résultats qualitatifs de ces écoutes à l'organe central pour que celui-ci administre le réseau en conséquence.

3. Procédé selon la revendication 2, caractérisé en ce que, en écoute,
- une station de base passe en revue, dans chaque fenêtre temporelle, d'une trame à une autre, les signaux reçus dans les bandes de fréquence correspondant aux lois de fréquence assignées aux téléphones mobiles trafiquant dans cette fenêtre.

4. Procédé selon l'une des revendications 1 à 3, caractérisé en ce que le signal de synchronisation émis sur la balise spécifique est temporellement calé par rapport à celui émis sur la balise commune.

5. Procédé selon l'une des revendications 1 à 4, caractérisé en ce que la station de base spécifique communique un état d'occupation de ses canaux de trafic à l'organe central pour que ce dernier puisse attribuer à un téléphone mobile pénétrant un canal de trafic disponible parmi ses canaux de trafic.

6. Procédé selon l'une des revendications 1 à 5, caractérisé en ce qu'une cellule parapluie (17) émet le signal de synchronisation à la fréquence commune de balise sur le canal BCCH.

7. Procédé selon l'une des revendications 1 à 6, caractérisé en ce que les stations de base de la première macro-cellule répètent (Fα) un signal de synchronisation à la fréquence commune de balise sur le canal BCCH.

8. Procédé selon l'une des revendications 1 à 7, caractérisé en ce que
- une station de base quittée (19) de la deuxième macro-cellule émet un message (30) de transfert désignant une fréquence spécifique (Fj) de balise de la station de base spécifique, indiquant le calage temporel du canal BCCH spécifique, et, de préférence, une assignation d'une fenêtre temporelle d'accueil (TSj) et d'une loi de fréquence d'accueil (Fj), pour que le téléphone mobile (3) entre en communication immédiatement avec la station de base spécifique en respectant ce calage temporel spécifique, cette fenêtre temporelle d'accueil, et cette loi de fréquence d'accueil.

9. Procédé selon l'une des revendications 1 à 8, caractérisé en ce que
- une première station de base transmet, sur le canal de trafic (TCH) qu'elle utilise avec un téléphone mobile, une assignation d'un protocole de communication de ce téléphone mobile avec une deuxième station de base pour tenir compte du déplacement de ce téléphone mobile par rapport à cette première station de base.
